## Europäisches Patentamt

## European Patent Office

## Office européen des brevets

(19)

(11) Veröffentlichungsnummer: **0 278 912**
**A1**

(12)

# EUROPÄISCHE PATENTANMELDUNG

(21) Anmeldenummer: 88810070.8

(22) Anmeldetag: 05.02.88

(51) Int. Cl.⁴: **B 62 D 21/15**
F 16 B 11/00

(30) Priorität: 11.02.87 CH 497/87

(43) Veröffentlichungstag der Anmeldung:
17.08.88 Patentblatt 88/33

(84) Benannte Vertragsstaaten:
CH DE FR GB IT LI SE

(71) Anmelder: CIBA-GEIGY AG
Klybeckstrasse 141
CH-4002 Basel (CH)

(72) Erfinder: Kuhnert, Jürgen
Kapellengrün 11
D-7841 Bad Bellingen (DE)

(54) Verfahren zur Erhöhung der Rissfestigkeit einer Klebverbindung, entsprechende Klebverbindung und entsprechend ausgebildetes geklebtes Tragteil.

(57) Ein Längsträger besteht aus einem U-förmigen Profilteil (11) und einem flachen Deckelteil (12), welche beiden Teile längs Kleblaschen (11a, 12a) miteinander verklebt sind. Zur Verbesserung der Risseigenschaften unter Belastung sind die Kleblaschen mit gegeneinander versetzt angeordneten Riss-stopp-Einschnitten (13, 14) versehen.

FIG. 3

EP 0 278 912 A1

**Beschreibung**

Verfahren zur Erhöhung der Rissfestigkeit einer Klebverbindung, entsprechende Klebverbindung und entsprechend ausgebildetes geklebtes Tragteil

Die Erfindung betrifft ein Verfahren zur Erhöhung der Rissfestigkeit einer Klebverbindung, eine entsprechende Klebverbindung und ein entsprechend ausgebildetes geklebtes Tragteil gemäss dem Oberbegriff der unabhängigen Ansprüche.

In vielen Bereichen der Konstruktionstechnik müssen Teile miteinander verschweisst werden. Insbesondere auch im Automobilbau besteht aber heute ein zunehmender Trend, Schweissungen wo immer möglich durch Klebung zu ersetzten. Neben den geringeren Kosten ergeben sich daraus auch noch Vorteile wie geringere Korrosion und höhere Energieabsorption im Belastungsfall.

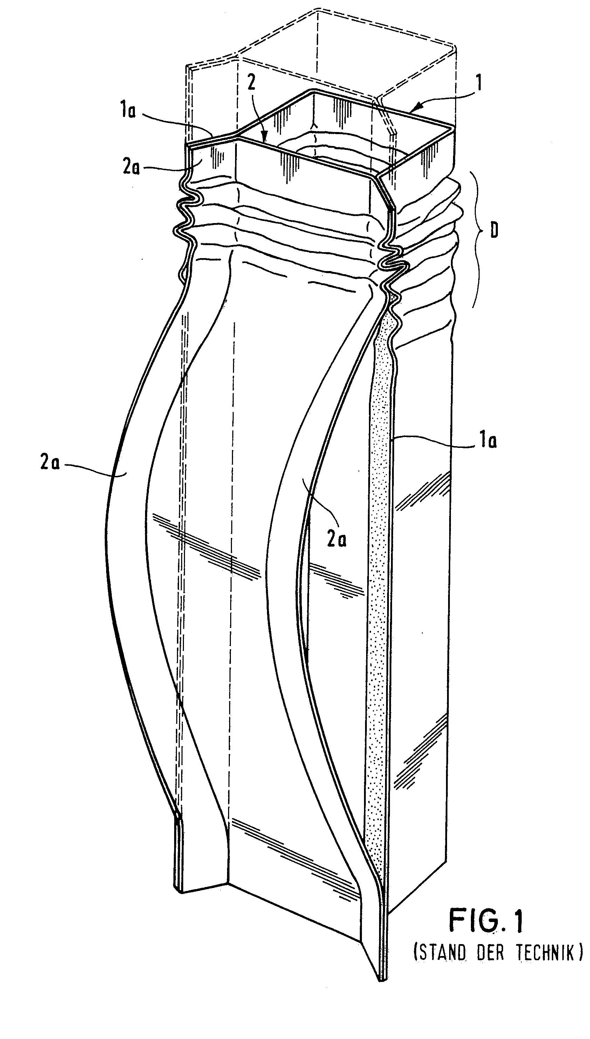

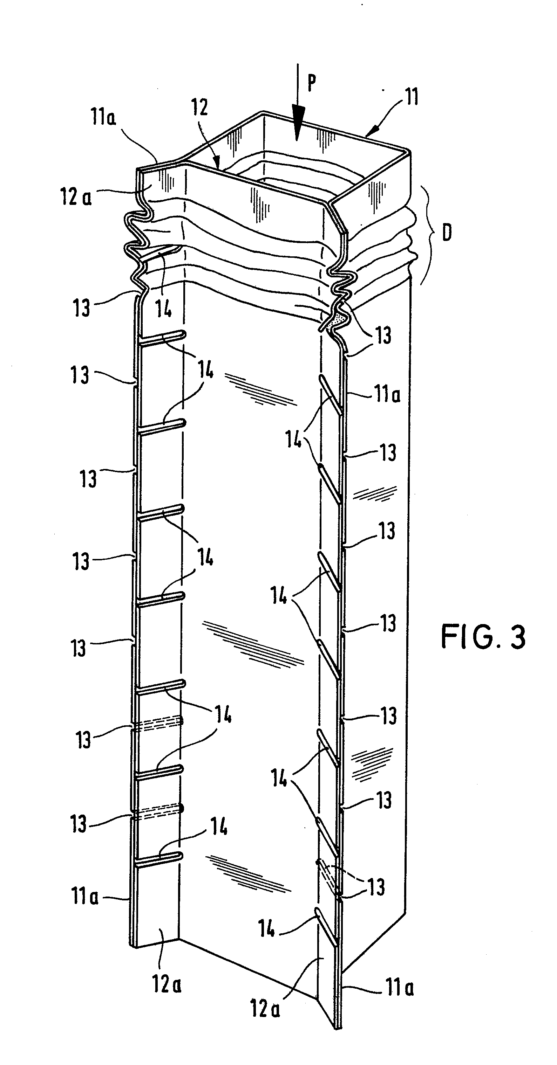

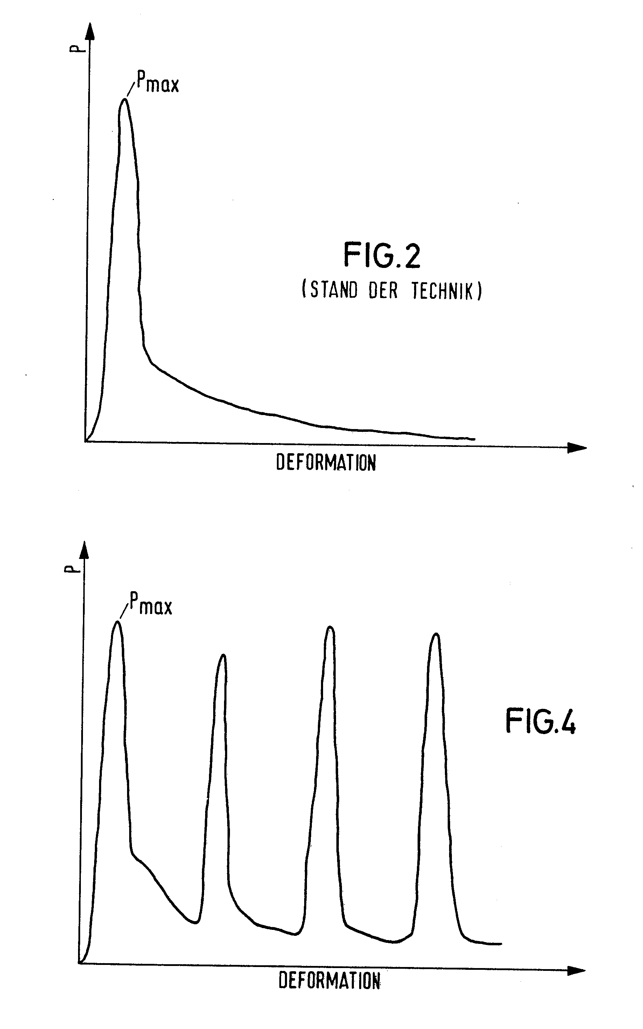

Ein typisches Beispiel eines solchen tragneden Teils ist ein kastenförmiger Längsträger, wie er etwa in Figur 1 dargestellt ist. Unterwirft man einen solchen Längsträger einer Impact-Beanspruchung (Belastung parallel zur Längsrichtung), so faltet er zunächst kontrolliert unter Absorption von Energie. Wenn allerdings die Belastung ein gewisses Höchstmass überschreitet, brechen die Klebfugen schlagertig auf und die Festigkeit des Ganzen und damit schliesslich auch die Energieabsorption geht rapide auf einen verhältnismässig geringen Restwert zurück, der weiteren Verformung wird also praktisch kein Widerstand entgegengesetzt. Die insgesamt absorbierte Engergie bleibt verhältnismässig gering. Das in Figur 2 dargestellte Kraft-Weg-Diagramm (Belastung-Verformung) zeigt diese Verhältnisse anschaulich.

Durch die Erfindung soll nun dieses bei allen geklebten tragenden Teilen vorhandene Problem gelöst werden. Insbesondere soll die Klebung solcher Teile so modifiziert werden, dass sich eine insgesamt verbesserte Energieabsorption ergibt.

Die erfindungsgemässen Massnahmen, welche zur Lösung dieses Problems führen, sind in den unabhängigen Ansprüchen beschrieben. Bevorzugte Ausführungsformen und Weiterbildungen ergeben sich aus den abhängigen Ansprüchen.

Nach der grundlegenden Idee der Erfindung werden also die Fügeteile im Bereich der Klebfuge so eingeschnitten, dass die Einschnitte der beiden Kleblaschen abwechselnd gegenseitig auf Lücke stehen. Die Einschnitte selbst bewirkten einen Risstoppeffekt, d.h. nach dem Erreichen eines Einschnitts muss jedesmal wieder von neuem die wesentlich höhere Anrissenergie aufgebracht werden, um ein Weiterreissen der Klebfuge zu bewirken. Durch die gegenseitig verzahnte Anordung der Einschnitte wird eine nennenswerte Stabilitätsschwächung vermieden.

In DE-A-24 57 400 ist ein kastenförmiger Längsträger für Fahrzeuge beschrieben, welcher bei Ueberschreitung einer vorgegebenen Grenzbelastung unter faltenartiger Verformung zusammengestaucht wird. Dieser Längsträger ist im Prizip gleich aufgebaut wie der hier in Fig. 1 gezeigte, jedoch mit dem wesentlichen Unterschied, dass seine Einzelteile nicht miteinander verklebt sondern verschweisst sind. In den Querschnittsecken des Trägers sind ferner quer verlaufende Einschnitte vorhanden. Diese Einschnitte haben die Aufgabe, den Kastenträger an bestimmten Orten gezielt zu schwächen um damit eine kontrollierte faltenartige Verformung zu erreichen. Dass solche Einschnitte einen Risstoppeffekt aufweisen könnten, ist dieser Druckschrift nicht zu entnehmen. Dieses Problem tritt dort überhaupt nicht auf, da es sich dort, wie schon gesagt, nicht um einen geklebten sondern um einen punktgeschweissten Träger handelt.

Im folgenden wird die Erfindung anhand der Zeichnung näher erläutert. Es zeigen:
Fig. 1 einen geklebten Längsträger herkömmlicher Art nach einem Impact-Versuch,
Fig. 2 ein entsprechendes Kraft-Weg-Diagramm zur Veranschaulichung von Belastung und Verformung,
Fig. 3 einen erfindungsgemäss ausgebildeten Längsträger nach einem Impact-Versuch und
Fig. 4 ein entsprechendes Kraft-Weg-Diagramm für diesen Träger.

Die kastenförmigen Längsträger der Figuren 1 und 3 sind im Prinzip gleich aufgebaut. Sie bestehen je aus zwei Fügeteilen, und zwar einem U-Profil 1 bzw. 11 und einem Deckel 2 bzw. 12. Beide Fügeteile sind seitlich mit abgewinkelten Klebelaschen 1a und 2a bzw. 11a und 12a versehen, längs denen sie miteinander verklebt sind. Die Klebfugen befinden sich also zwischen den jeweiligen Kleblaschen.

In Figur 1 ist der Ausgangszustand des (herkömmlichen) Längsträgers vor dem Impact-Versuch strichliert angedeutet. Für den Impact-Versuch wird nun der Träger parallel zu seiner Längsrichtung (Pfeil P, Fig. 3) belastet. Unter dieser Belastung verformt er sich dabei unter Energieabsorption zunächst kontrolliert (Deformationszone D). Bei einer gewissen Grenzgelastung $P_{max}$ (siehe auch Kraft-Weg-Diagramm Fig. 2) reisst jedoch die Klebfuge zwischen den Klebelaschen 1a und 2a auf und der Widerstand des Trägers sinkt auf einen sehr geringen Wert, die Fügeteile verformen sich unkontrolliert und vermögen praktisch keine Energie mehr zu absorbieren.

Die erfindungsgemäss mit Rissstopp-Einschnitten 13 und 14 in den Kleblaschen 11a und 12a ausgebildete Längsträger 11-12 der Figur 3 dagegen verhält sich ganz anders; zwar reisst dort die Klebfuge bei Ueberschreiten einer gewissen Grenzbelastung $P_{max}$ ebenfalls auf, jedoch läuft der Riss nicht über die gesamte Länge der Klebfuge, sondern jeweils nur bis zum nächsten Einschnitt 13 bzw. 14. Hernach steigt der Widerstand des Trägers wieder und zum weiteren Reissen der Klebfuge muss wieder etwa dieselbe hohe Anrissenergie bzw. -Kraft aufgebracht werden wie beim ersten Anreissen. Die Figur 4 macht diese Verhältnisse deutlich. Aus Figur 4 wird auch sofort klar, dass der erfindungsgemässe Träger insgesamt wesentlich mehr Energie absorbieren kann als ein vergleichbarer konventionell verklebter bzw. ausgebildeter Träger.

Die Einschnitte 13 und 14 in den Klebelaschen haben also einen rissstoppenden Effekt. Sie sind im wesentlichen quer zur Riss-Laufrichtung (letztere ist im wesentlichen parallel zur Belastungsrichtung) angeordnet. Ihre Anzahl bzw. spezifische Anzahl (Einschnitte pro Längeneinheit bzw. reziproker Abstand) wird vernünftigerweise so gewählt, dass sich ein tragbarer Kompromiss aus der erreichten Rissfestigkeitssteigerung einerseit und der mit den Einschnitten verbundenen Minderung der mechanischen Festigkeitseigenschaften anderseits ergibt. Besonders günstig und zweckmässig ist es, wenn die Einschnitte 13 und 14 in den miteinander verbundenen Kleblaschen gegenseitig auf Lücke stehen, wie dies in Figur 3 dargestellt ist.

## Patentansprüche

1. Verfahren zur Erhöhung der Rissfestigkeit einer Klebverbindung, dadurch gekennzeichnet, dass die miteinander verklebten Fügeteile im Bereich der Klebfuge mit quer zur Hauptbelastungsrichtung verlaufenden Einschnitten versehen werden, welche einen Rissstopp-Effekt aufweisen.

2. Verfahren nach Anspruch 1, dadurch gekennzeichnet, dass in Hauptbelastungsrichtung hintereinander mehrere Einschnitte vorgesehen werden.

3. Verfahren nach Anspruch 2, dadurch gekennzeichnet, dass die Einschnitte im einen Fügeteil gegenüber denen im anderen Fügeteil versetzt angeordnet werden.

4. Rissfeste Klebverbindung zwischen zwei Fügeteilen, dadurch gekennzeichnet, dass die Fügeteile im Bereich ihrer Klebfuge mit quer zur Hauptbelastungsrichtung verlaufenden Rissstopp-Einschnitten versehen sind.

5. Aus wenigstens zwei miteinander verklebten Fügeteilen bestehendes Tragteil, dadurch gekennzeichnet, dass die beiden Fügeteile im Bereich ihrer Klebfugen mit Rissstopp-Einschnitten ausgebildet sind.

6. Klebverbindung nach Anspruch 4 dadurch gekennzeichnet, dass sie gemäss Anspruch 2 oder 3 ausgebildet ist.

7. Tragteil nach Anspruch 5, dadurch gekennzeichnet, dass es gemäss Anspruch 2 oder 3 ausgebildet ist.

0278912

FIG.1
(STAND DER TECHNIK)

FIG. 3

0278912

FIG.2
(STAND DER TECHNIK)

DEFORMATION

FIG.4

DEFORMATION

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,X | DE-A-2 457 400 (VOLKSWAGENWERK) <br> * Seite 2, Absatz 3; Seite 3, Absatz 3; Figuren 2,3 * <br> --- | 1-7 | B 62 D 21/15 <br> F 16 B 11/00 |
| A | TECHNISCHE RUNDSCHAU, Band 76, Nr. 9, 28. Februar 1984, Seite 19, Bern, CH; T. KRIST: "Metallkleben aktueller denn je" <br> * Spalte 3, Figur "Vergleich von punktgeschweissten und geklebten Trägern" * <br> --- | 1,4 | |
| A | S. HILDEBRAND: "Feinmechanische Bauelemente", 1967, Seite 122, VEB Verlag Technik, Berlin, DD <br> * Seite 122, Abschnitt 2.2 * <br> --- | 1,4 | |
| A | DE-B-1 271 573 (HASSENBACH) <br> * Spalte 1, Zeile 41 - Spalte 2, Zeile 20 * <br> --- | 3 | |
| A | DE-A-2 008 932 (HOESCH) <br> * Figuren 1-4 * <br> ----- | 3 | |

**RECHERCHIERTE SACHGEBIETE (Int. Cl.4)**

F 16 F
B 62 D
B 60 R
F 16 B

Der vorliegende Recherchenbericht wurde für alle Patentansprüche erstellt

| Recherchenort | Abschlußdatum der Recherche | Prüfer |
|---|---|---|
| DEN HAAG | 25-04-1988 | KUHN E.F.E. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument